# EUROPÄISCHE PATENTSCHRIFT

(11) **EP 3 540 384 B1**
(45) Veröffentlichungstag und Bekanntmachung des Hinweises auf die Patenterteilung: **21.07.2021**
(21) Anmeldenummer: 18161785.3
(22) Anmeldetag: 14.03.2018
(51) Int. Cl.: G01F 22/00, G01F 23/284, G01F 23/00

(54) **RADARFÜLLSTANDMESSGERÄT UND VERFAHREN ZUM BETREIBEN EINES RADARFÜLLSTANDMESSGERÄTES**
RADAR FILL LEVEL MEASURING DEVICE AND METHOD FOR OPERATING A RADAR FILL LEVEL MEASURING DEVICE
APPAREIL DE MESURE DE NIVEAU DE REMPLISSAGE PAR RADAR ET PROCÉDÉ DE FONCTIONNEMENT D'UN APPAREIL DE MESURE DE NIVEAU DE REMPLISSAGE PAR RADAR

(43) Veröffentlichungstag der Anmeldung: 18.09.2019
(73) Patentinhaber: VEGA Grieshaber KG, 77709 Wolfach (DE)
(72) Erfinder: Laun, Robert, 77756 Hausach (DE)
(74) Vertreter: Patentanwälte Bauer Vorberg Kayser

(56) Entgegenhaltungen:
- EP-A1- 2 128 576
- WO-A1-2017/084701
- DE-A1- 10 106 176
- DE-A1-102004 041 857
- DE-A1-102012 014 307
- DE-A1-102014 212 955
- US-A1- 2004 108 951
- US-A1- 2011 083 504
- US-A1- 2017 184 437
- US-A1- 2017 284 854
- US-A1- 2017 356 786

## Beschreibung

Die vorliegende Erfindung betrifft ein Radarfüllstandmessgerät gemäß dem Oberbegriff des Patentanspruchs 1, und ein Verfahren zum Betreiben eines solchen Radarfüllstandmessgerätes gemäß dem Oberbegriff des Patentanspruchs 4.

Radarfüllstandmessgeräte basieren auf dem Prinzip der Laufzeitmessungen. Bei den Laufzeitmessungen werden die Signallaufzeiten von ausgesandten Messsignalen, insbesondere Radarsignalen bestimmt. Aus diesen Signallaufzeiten wird dann die gewünschte Messgröße ermittelt, beispielsweise ein Füllstand oder Grenzstand. Die Signale weisen eine bestimmte Frequenz auf. Radarsignale lassen sich dem Bereich der Hochfrequenztechnik (HF-Technik) zuordnen. Als Signale, die im Bereich der Hochfrequenztechnik liegen, werden Signale im Bereich von 5 GHz bis 79 GHz und darüber hinaus als Radarsignale eingesetzt.

Aus dem Stand der Technik sind Radarmessgeräte, beispielsweise Radarfüllstandmessgeräte bekannt, die nach dem Laufzeitprinzip einen Füllstand eines in einem Behälter befindlichen Füllguts, insbesondere von Flüssigkeiten und Schüttgütern detektieren. Solche Radarfüllstandmessgeräte sind beispielsweise mit Hornantennen ausgestattet, über die ein eingekoppeltes HF-Signal in Richtung des Füllgutes abgestrahlt und von diesem reflektiert wird. In einem kombinierten Sende- und Empfangssystem des Radarfüllstandmessgerätes werden die vom Füllgut reflektierten Signale erfasst und ausgewertet.

Hornantennen haben grundsätzlich einen einfachen und robusten Aufbau, einen sehr guten Wirkungsgrad und sind kostengünstig herzustellen.

Zur Strahlformung ist es bekannt, dass solche Hornantennen an einem in Hauptabstrahlrichtung eines Antennenhorns vorderseitigen Ende eine dielektrische Linse aufweisen können. Die sich im Antennenhorn im Wesentlichen kugelsegmentförmig ausbreitenden elektromagnetischen Wellen werden auf diese Weise in möglichst parallele und sich in Hauptabstrahlrichtung ausbreitende Wellenfronten überführt und so eine Richtwirkung der Antenne erzielt.

Weiterer Stand der Technik ist aus der US 2017/356786A1 sowie der DE 10 2004 041 857 A1, welche ein Radarfüllstandmessgerät gemäß der Präambel des angefügten unabhängigen Patentanspruchs 1 spezifiziert, bekannt.

Radargeräte zur Füllstandmessung werden mit immer höhere Frequenzen betrieben, damit sie kleiner und kostengünstiger produziert werden können. Durch die höheren Frequenzen wird ferner ein Öffnungswinkel, in dem die Antennen abstrahlen immer kleiner, sodass auch zwischen Behältereinbauten hindurch gemessen werden kann, ohne Störechos zu erhalten. Diese Eigenschaft hat jedoch den Nachteil, dass das Radarfüllstandmessgerät sehr genau senkrecht zu einer Füllgutoberfläche ausgerichtet werden muss, damit eine Reflexion des ausgesendeten Signals an der Füllgutoberfläche auch wieder die Empfangsantenne trifft. Hierdurch wird eine Montage und Inbetriebnahme solcher Radarfüllstandmessgeräte immer aufwendiger. Auch im Betrieb solcher Radarfüllstandmessgeräte können Probleme auftreten, bspw. wenn sich eine Lage des Radarfüllstandmessgeräts oder der gesamten Messumgebung, bspw. eines Tanks oder Silos ändert.

Hier setzt die vorliegende Erfindung an.

Es ist die Aufgabe der vorliegenden Erfindung, ein Radarfüllstandmessgerät derart weiterzubilden, dass die Nachteile aus dem Stand der Technik überwunden werden, insbesondere eine hoch präzise Ausrichtung des Messgerätes nicht mehr notwendig ist. Es soll ferner ein Verfahren zum Betreiben eines solchen Radarfüllstandmessgerätes angegeben werden.

Diese Aufgaben werden durch ein Radarfüllstandmessgerät mit den Merkmalen des Anspruchs 1, sowie ein Verfahren zum Betreiben eines solchen Radarfüllstandmessgerätes mit den Merkmalen des Patentanspruchs 4 gelöst.

Vorteilhafte Weiterbildungen sind Gegenstand abhängiger Patentansprüche.

Ein erfindungsgemäßes Radarfüllstandmessgerät mit einem Füllstandsensor mit einer Antenne zum Aussenden und Empfangen elektromagnetischer Wellen und einer Lageerkennung zur Erfassung einer Lage des Radarfüllstandmessgerätes zeichnet sich dadurch aus, dass die Antenne als Antenne mit einstellbarer Hauptabstrahlrichtung ausgebildet ist.

Erfindungsgemäß wird zur Lageerkennung die Hauptabstrahlrichtung der Antenne so lange verändert, bis ein Empfangssignal maximal wird. Ein maximales Empfangssignal ist bei einer Reflexion des ausgesendet Signals an einer zur Hauptabstrahlrichtung senkrechten Füllgutoberfläche zu erwarten, sodass bei maximalem Signal von einer optimalen,
d.h. senkrecht zur Füllgutoberfläche ausgerichteten Hauptabstrahlrichtung ausgegangen werden kann.

In einer alternativen Ausgestaltung kann die Lageerkennung durch einen Lagesensor realisiert sein.

Unter einem Lagesensor gemäß der vorliegenden Erfindung soll eine Sensor verstanden werden, der eine Lage des Radarfüllstandmessgerätes relativ zu einer Füllgutoberfläche ermittelt, da die zur Füllstandmessung verwendete Radarstrahlung von der Füllgutoberfläche reflektiert und bei einem senkrechten Auftreffen der Radarstrahlung zur Antenne zurückgeworfen wird.

Bei der Messung von Füllständen für Flüssigkeiten ist damit eine senkrechte Ausrichtung der Hauptabstrahlrichtung der Antenne zur Flüssigkeitsoberfläche einzustellen. Da sich die Flüssigkeitsoberfläche in der Regel senkrecht zur Erdanziehungskraft ausrichtet, kann im einfachsten Fall ein Beschleunigungssensor oder ein Neigungssensor, der den Winkel zur Lotrichtung z.B. magnetisch misst und diesen direkt ausgibt und zur Ermittlung der Lage des Radarfüllstandmessgerätes verwendet werden.

In bewegten Systemen, in denen die Flüssigkeitsoberfläche aufgrund der Bewegung bzw. aufgrund von Bewegungsänderungen auch eine andere Ausrichtung aufweisen kann, können aber auch bspw. optische Systeme zur Ermittlung der Lage des Radarfüllstandmessgerätes zur Flüssigkeitsoberfläche verwendet werden.

Alternativ kann auf Basis der Messwerte des Beschleunigungssensors eine Berechnung der tatsächlich auf das Füllgut wirkenden Beschleunigung und eine daraus resultierende Ausrichtung der Flüssigkeitsoberfläche erfolgen.

Bei einer Antenne mit einstellbarer Hauptabstrahlrichtung kann die Richtung, in der die Radarstrahlung ausgesendet und empfangen wird, ohne einen mechanischen Eingriff verändert werden. Eine solche Veränderung wird relativ zu einer Abstrahlrichtung ohne eine Veränderung, die als 0°-Richtung angenommen wird, gemessen. Ohne einen mechanischen Eingriff bedeutet insbesondere, dass keinerlei Veränderung einer Ausrichtung der Antenne relativ zum übrigen Messgerät stattfindet. Durch eine erfindungsgemäße Ausgestaltung des Radarfüllstandmessgerätes mit einer Antenne mit einstellbarer Hauptabstrahlrichtung wird der Betrieb eines Radarfüllstandmessgerätes deutlich vereinfacht, da durch eine Anpassung der Hauptabstrahlrichtung an eine mittels des Lagesensors ermittelte Lage des Radarfüllstandmessgerätes angepasst werden kann. Eine Füllstandmessung kann damit weitgehend unabhängig von einer Lage des Radarfüllstandmessgerätes senkrecht zur Füllgutoberfläche erfolgen.

Das Radarfüllstandmessgerät kann damit bei einer Montage ohne aufwendige Feinjustierung bei der Ausrichtung des Messgerätes eingebaut werden. Eine senkrechte Ausrichtung der Hauptabstrahlrichtung kann elektronisch durch Anpassung einer Ansteuerung der Antenne erfolgen.

Besonders einfach ist eine solche Einstellung der Hauptabstrahlrichtung möglich, wenn die Antenne als Phased-Array-Antenne ausgebildet ist.

Unter einer Phased-Array-Antenne wird eine Gruppen-Antenne, d.h. einer Anordnung aus mehreren Antennenelementen in einer zweidimensionalen Struktur, insbesondere in Zeilen und Spalten, also einem Array, verstanden, wobei einzelne Antennenelemente oder Gruppen von Antennenelementen unterschiedlich ansteuerbar sind. Durch eine Überlagerung des Sendesignals der einzelnen Antennenelemente wird bei dieser Art von Antennen eine starke Richtwirkung erzielt. Werden alle Antennenelemente phasengleich angesteuert, so entspricht die Hauptabstrahlrichtung der Antenne der 0°-Richtung.

Durch eine Phasenverschobene Ansteuerung der einzelnen Antennenelemente kann die Hauptabstrahlrichtung der Antenne in eine Richtung abweichend von der 0°-Richtung überführt werden. Theoretisch kann die Abweichung von der 0°-Richtung bis zu 90° betragen. In der Praxis sind aufgrund von mit zunehmendem Winkel stark steigenden Verlusten Abweichungen von max. +/- 60° möglich und werden insbesondere nur bis typischerweise +/- 30° realisiert.

Insbesondere kleinere Abweichungen von einer senkrechten Ausrichtung der 0°-Richtung auf die Füllgutoberfläche könne damit elektronisch durch eine Ansteuerung der Antenne korrigiert werden. Das vorliegende System ist besonders gut für Abweichungen von bis zu 15° geeignet.

Eine besonders günstige, auf dem Markt frei verfügbare und gut erprobte Variante von Lagesensoren sind Beschleunigungssensoren. Beschleunigungssensoren können in stationären Systemen sehr präzise die Richtung der Erdanziehungskraft und damit die Normal-Richtung auf Flüssigkeitsoberflächen ermitteln. In bewegten Systemen können aber auch Beschleunigungen in andere Richtungen ermittelt werden. Ist bspw. durch ein Verkippen des Behälters die Normalrichtung außerhalb eines zulässigen Bereichs, bspw. des Bereichs für den eine Anpassung der Hauptabstrahlrichtung erfolgen kann, oder wirken bei bewegten Systemen zu große Querbeschleunigungen, so kann mittels des vorliegenden Systems eine Füllstandmessung unter diesen Bedingungen als unzulässig gekennzeichnet, oder verworfen und ggf. eine entsprechende Fehlermeldung ausgegeben werden.

In einer vorteilhaften Ausgestaltung hat die Antennencharakteristik der Antenne einen Öffnungswinkel von 1 - 6°.

Die gewünschte Abstrahlrichtung kann insbesondere eine senkrechte Ausrichtung sein.

Unter einem groben Ausrichten im Sinne der vorliegenden Erfindung soll ein ausrichten der 0°-Richtung in einem Bereich von +/- 10° relativ zur gewünschten Abstrahlrichtung verstanden werden.

Dadurch, dass durch den Lagesensor eine Ausrichtung der Füllstandmessgerätes bzw. der Antenne exakt bestimmbar ist, kann ein Einstellen der Hauptabstrahlrichtung durch Anpassung der Ansteuerung der Antenne erfolgen. Dieses Vorgehen erleichtert die Montage und liefert deutlich bessere Ergebnisse für die Einstellung der Hauptabstrahlrichtung im Vergleich zu einer mechanischen Ausrichtung des Messgeräts.

Ein erfindungsgemäßes Verfahren zum Betreiben eines Radarfüllstandmessgerätes mit einem Füllstandsensor mit einer Antenne zum Aussenden und Empfangen elektromagnetischer Wellen, wobei die Antenne als Antenne mit einstellbarer Hauptabstrahlrichtung ausgebildet ist und einem Lagesensor zur Erfassung einer Lage des Radarfüllstandmessgerätes, weist die im unabhängigen Patentanspruch 4 spezifizierten Schritte auf.

Wenn der Behälter nicht bewegt wird, braucht die Lage nur beim Einschalten bestimmt werden. Auf diese Weise kann Energie gespart werden.

Erfindungsgemäß ist in dem Radarfüllstandmessgerät ein 3-dimensionales Modell des Behälters hinterlegt und es wird für unterschiedliche Abweichungen der 0°-Richtung von der Senkrechten ein verbleibendes Volumen des Füllguts in dem Behälter zu berechnet und ausgegeben. Beispielsweise könnte für Behälter, die zum Entleeren gekippt werden, weiterhin eine Füllstandmessung erfolgen. Dazu muss eine kontinuierliche Lagemessung erfolgen, die die jeweilige Lage des Behälters ermittelt.

Bei Überschreiten eines maximal zulässigen Winkels der Hauptabstrahlrichtung relativ zur 0°-Richtung kann ferner eine Fehlermeldung, bei einer Annäherung an den maximal zulässigen Winkel ggf. eine Warnmeldung ausgegeben werden.

Die vorliegende Erfindung wird nachfolgend anhand eines Ausführungsbeispiels unter Bezugnahme auf die beigefügte Figur näher erläutert.

Es zeigt:

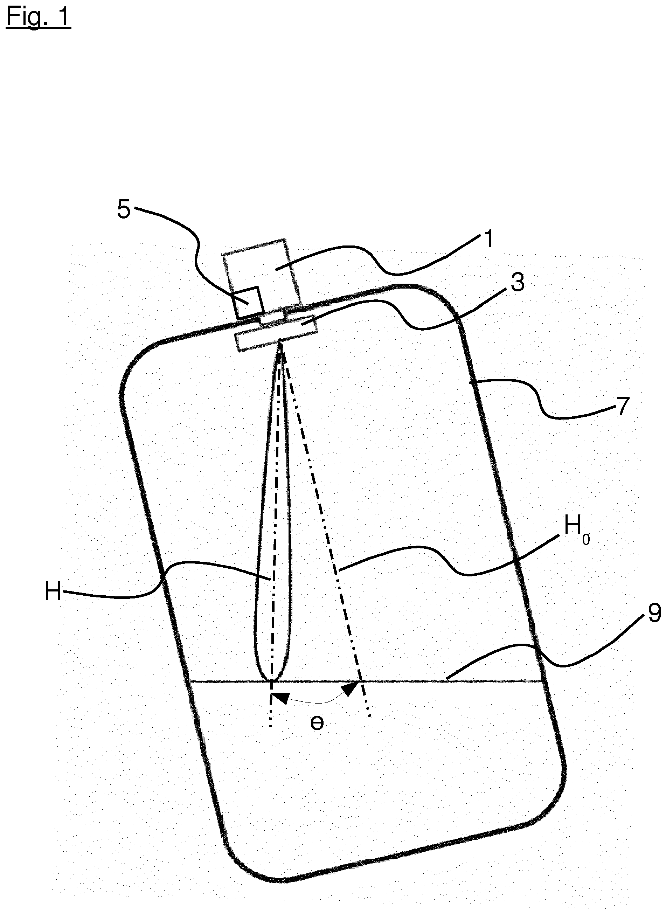

Figur 1 ein Anwendungsbeispiel eines Radarfüllstandmessgeräts gemäß der vorliegenden Anmeldung.

Figur 1 zeigt einen mit einer Flüssigkeit teilweise gefüllten Behälter 7 mit einem daran angebrachten Radarfüllstandmessgerät 1. Das Radarfüllstandmessgerät 1 weist einen Füllstandsensor zur Ermittlung eines Füllstandes der Flüssigkeit, vorliegend eine über eine Elektronik angesteuerte Antenne 3 zum Senden und Empfangen elektromagnetischer Strahlung im GHz-Bereich, auf. Die Antenne 3 ist vorderseitig an einem Gehäuse des Radarfüllstandmessgerätes 1 angeordnet und feststehend mit diesem verbunden, d.h. ein Lage der Antenne 3 relativ zu dem Gehäuse bzw. einer in dem Gehäuse angeordneten Elektronik ist unveränderlich.

Mittels der Antenne 3 werden Radarwellen in Richtung einer Flüssigkeitsoberfläche 9 ausgesendet und von dieser reflektiert. Würden die Radarwellen in der sog. 0°-Richtung der Antenne 3 ausgesendet und diese entsprechend der Reflexionsgesetzte reflektiert, würde die Reflexion nicht zur Antenne 3 des Radarfüllstandmessgerätes 1 gelangen. Eine Füllstandmessung wäre nicht möglich.

In dem Gehäuse des Radarfüllstandmessgerätes 1 ist daher zusätzlich zu einer üblicherweise verbauten Messelektronik ein Lagesensor 5 angeordnet, der eine Lage des Radarfüllstandmessgerätes 1 ermittelt. Der Lagesensor 5 ist im vorliegenden Ausführungsbeispiel als Beschleunigungssensor ausgebildet. Der Beschleunigungssensor kann eine Richtung der Erdanziehungskraft ermitteln, sodass die Lage des Radarfüllstandmessgerätes 1 relativ zur Richtung der Erdanziehungskraft, also relativ zur Senkrechten ermitteln kann.

Da eine Flüssigkeitsoberfläche 9 in der Regel horizontal verläuft, d.h. die Richtung der Erdanziehungskraft eine Flächennormale der Flüssigkeitsoberfläche 9 ist, kann auf diese Weise auch die Richtung senkrecht auf die Flüssigkeitsoberfläche 9 ermittelt werden.

Durch die Ausgestaltung der Antenne 3 als Phased-Array Antenne kann eine Abstrahlcharakteristik der Antenne 3 so verändert werden, dass die Radarwellen senkrecht auf die Füllgutoberfläche 9 auftreffen und somit auch zur Antenne 3 reflektiert werden.

Im vorliegenden Fall weicht die Hauptabstrahlrichtung H der Antenne 3 um einen Winkele θ von der 0°-Richtung der Antenne 3 ab, sodass die Radarstrahlung wieder senkrecht auf die Füllgutoberfläche 9 auftrifft.

Die vorliegende Anordnung kann vorteilhafterweise in Situationen eingesetzt werden, in denen sich ein Ausrichtung der Füllgutoberfläche 9 relativ zur Anbringung des Radarfüllstandmessgerätes ändern kann. Denkbar wäre bspw. der Einsatz in Tankfahrzeugen oder anderen mobilen Behältern, auf Schiffen oder auch lediglich um eine Montage und Ausrichtung des Radarfüllstandmessgerätes 1 in nicht bewegten Systemen zu erleichtern.

### Bezugszeichenliste

- 1: Radarfüllstandmessgerät
- 3: Antenne
- 5: Lageerkennung / Lagesensor
- 7: Behälter
- 9: Füllgutoberfläche

- H: Hauptabstrahlrichtung
- H₀: 0°-Richtung
- ⊖: Winkel

## Patentansprüche

1. Radarfüllstandmessgerät (1) zur Erfassung eines Füllstandes in einem Behälter mit
- einem Füllstandsensor mit einer Antenne (3) zum Aussenden und Empfangen elektromagnetischer Wellen,
- einer Lageerkennung (5) zur Erfassung einer Lage des Radarfüllstandmessgerätes (1), wobei
die Antenne (3) als Antenne mit einstellbarer Hauptabstrahlrichtung (H) ausgebildet ist
**dadurch gekennzeichnet, dass** eine Lageerkennung durch Verändern der Hauptabstrahlrichtung der Antenne, solange bis ein Empfangssignal bei Erreichen einer Senkrechten zur Füllgutoberfläche maximal wird, erfolgt und in dem Radarfüllstandmessgerät (1) ein 3-dimensionales Modell des Behälters hinterlegt ist und für unterschiedliche Abweichungen der 0°-Richtung von der Senkrechten zur Füllgutoberfläche ein verbleibendes Volumen des Füllguts in dem Behälter berechnet und ausgegeben wird, wobei die 0° - Richtung die Richtung ohne eine Veränderung bezeichnet.

2. Radarfüllstandmessgeräte (1) gemäß Anspruch 1,
**dadurch gekennzeichnet, dass** die Antenne (3) als Phased-Array-Antenne ausgebildet ist.

3. Radarfüllstandmessgerät (1) gemäß einem der vorhergehenden Ansprüche,
**dadurch gekennzeichnet, dass** die Antenne (3) einen Öffnungswinkel (e) von 1° bis 6° aufweist.

4. Verfahren zum Betreiben eines Radarfüllstandmessgerätes (1) mit einem Füllstandsensor mit einer Antenne (3) zum Aussenden und Empfangen elektromagnetischer Wellen, wobei die Antenne (3) als Antenne mit einstellbarer Hauptabstrahlrichtung (H) ausgebildet ist und einem Lagesensor (5) zur Erfassung einer Lage des Radarfüllstandmessgerätes (1), wobei in dem Radarfüllstandmessgerät (1) ein 3-dimensionales Modell des Behälters hinterlegt ist, mit folgenden Schritten:
- Ermitteln einer Lage des Radarfüllstandmessgerätes (1), durch Verändern der Hauptabstrahlrichtung der Antenne, solange bis ein Empfangssignal bei Erreichen einer Senkrechten zur Füllgutoberfläche maximal wird,
- Einstellen eines Winkels (e) der Hauptabstrahlrichtung (H) der Antenne (3) des Radarfüllstandmessgerätes (1) derart, dass die Hauptabstrahlrichtung (H) senkrecht steht,
- Durchführen einer Füllstandmessung mit der so eingestellten Hauptabstrahlrichtung (H)
- berechnen und ausgeben ein verbleibendes Volumens des Füllguts in dem Behälter.

## Claims

1. A radar level measuring device (1) for detecting a filling level in a container, with
- a filling level sensor with an antenna (3) for emitting and receiving electromagnetic waves,
- a position recognition (5) for detecting a position of the radar level measuring device (1), wherein the antenna (3) is configured as an antenna with an adjustable main emission direction (H),
**characterized in that**
a position recognition takes place by changing the main emission direction of the antenna until a received signal reaches maximum when a perpendicular to the filling material surface is reached, and a 3-dimensional model of the container is stored in the radar level measuring device (1), and a remaining volume of the filling material in the container is calculated and outputted for different deviations of the 0° direction from the perpendicular to the filling material surface, wherein the 0° direction refers to the direction without a change.

2. Radar level measuring devices (1) according to claim 1,
**characterized in that**
the antenna (3) is configured as a phased array antenna.

3. The radar level measuring device (1) according to any one of the preceding claims,
**characterized in that**
the antenna (3) has a beam angle (θ) of 1° to 6°.

4. A method for operating a radar level measuring device (1) with a filling level sensor with an antenna for emitting and receiving electromagnetic waves, wherein the antenna (3) is configured as an antenna with an adjustable main emission direction (H), and a position sensor (5) for detecting a position of the radar level measuring device (1), wherein a 3-dimensional model of the container is stored in the radar level measuring device (1), comprising the following steps:
- determining a position of the radar level measuring device (1) by changing the main emission direction of the antenna until a received signal reaches maximum when a perpendicular to the filling material surface is reached,
- adjusting an angle (θ) of the main emission direction (H) of the antenna (3) of the radar level measuring device (1) such that the main emission direction (H) is perpendicular,
- carrying out a filling level measurement with the main emission direction (H) set in this way,
- calculating an outputting a remaining volume of the filling material in the container.

## Revendications

1. Dispositif de mesure de niveau de remplissage par radar (1) destiné à détecter un niveau de remplissage dans un conteneur, comprenant
- un capteur de niveau de remplissage comprenant une antenne (3) pour émettre et recevoir des ondes électromagnétiques,
- un dispositif de détection de position (5) pour détecter une position du dispositif de mesure de niveau de remplissage par radar (1), dans lequel ladite antenne (3) est conçue en tant qu'antenne ayant une direction d'émission principale (H) réglable,
**caractérisé par le fait qu'**une détection de position est effectuée en changeant la direction d'émission principale de l'antenne jusqu'à ce qu'un signal de réception devienne maximal lorsqu'une perpendiculaire à la surface du produit de remplissage est atteinte, et un modèle tridimensionnel du conteneur est mis en mémoire dans le dispositif de mesure de niveau de remplissage par radar (1), et un volume restant du produit de remplissage dans le conteneur est calculé et sorti pour différents écarts de la direction 0° de la perpendiculaire à la surface du produit de remplissage, dans lequel la direction 0° définit la direction sans un changement.

2. Dispositif de mesure de niveau de remplissage par radar (1) selon la revendication 1, **caractérisé par le fait que** l'antenne (3) est réalisée sous la forme d'une antenne réseau à commande de phase.

3. Dispositif de mesure de niveau de remplissage par radar (1), selon l'une quelconque des revendications précédentes, **caractérisé par le fait que** l'antenne (3) présente un angle d'ouverture (θ) compris entre 1° et 6°.

4. Procédé destiné à faire fonctionner un dispositif de mesure de niveau de remplissage par radar (1) comprenant un capteur de niveau de remplissage avec une antenne (3) pour émettre et recevoir des ondes électromagnétiques, dans lequel ladite antenne (3) est conçue en tant qu'antenne ayant une direction d'émission principale (H) réglable, ainsi qu'un capteur de position (5) pour détecter une position du dispositif de mesure de niveau de remplissage par radar (1), dans lequel un modèle tridimensionnel du conteneur est mis en mémoire dans le dispositif de mesure de niveau de remplissage par radar (1), comprenant les étapes suivantes consistant à:
- déterminer une position du dispositif de mesure de niveau de remplissage par radar (1) en changeant la direction d'émission principale de l'antenne jusqu'à ce qu'un signal de réception devienne maximal lorsqu'une perpendiculaire à la surface du produit de remplissage est atteinte,
- régler un angle (θ) de la direction d'émission principale (H) de l'antenne (3) du dispositif de mesure de niveau de remplissage par radar (1) de telle sorte que la direction d'émission principale (H) est perpendiculaire,
- effectuer une mesure de niveau de remplissage avec la direction d'émission principale (H) ainsi réglée,
- calculer et sortir un volume restant du produit de remplissage dans le conteneur.
